# EUROPEAN PATENT APPLICATION

(11) **EP 4 332 899 A1**
(43) Date of publication of application: **06.03.2024**
(21) Application number: 22874440.5
(22) Date of filing: 10.08.2022
(51) Int. Cl.: G06T 7/70, G06T 3/00, G06F 18/00

(54) **METHOD AND APPARATUS FOR DETERMINING TARGET POSITION, AND ELECTRONIC DEVICE AND STORAGE MEDIUM**

(30) Priority: 29.09.2021 CN 202111150982
(71) Applicant: Hangzhou Hikvision System Technology Co., Ltd., Hangzhou, Zhejiang 310051 (CN)
(72) Inventor: ZHU, Jingcheng, Hangzhou, Zhejiang 310051 (CN)
(74) Representative: Epping - Hermann - Fischer
(86) International application number: PCT/CN2022/111377
(87) International publication number: WO 2023/051044

(57) **Abstract**

Examples of the present disclosure provide a method and an apparatus for determining a position of a target, an electronic device, and a storage medium, which can quickly and accurately locate a preset target covered in a real image. The method comprises: acquiring a real image of a target scene and a virtual image of the target scene; projecting the real image to the virtual image to generate a fused image; and determining a position of a preset target located in the virtual image in the real image based on the fused image.

## Description

The present application claims the priority of a Chinese patent application No. 202111150982.9 filed with the China National Intellectual Property Administration on September 29, 2021 and entitled "METHOD AND APPARATUS FOR DETERMINING TARGET POSITION, AND ELECTRONIC DEVICE AND STORAGE MEDIUM", which is incorporated herein by reference in its entirety.

### TECHNICAL FIELD

The present disclosure relates to the technical field of video processing, in particular to a method and an apparatus for determining a position of a target, an electronic device, and a storage medium.

### BACKGROUND

Urban waterlogging often occurs in rainstorm, continuous rainfall and other weather conditions. When urban waterlogging occurs, sewer wells on roads and other locations are likely to become blocked or have their manhole covers washed away, which will seriously affect drainage speed and people's life safety. Therefore, when in the event of urban waterlogging, it is necessary to promptly clear blocked sewer wells or locate sewer wells whose manhole covers have been washed away in order to carry out corresponding treatment.

Due to the fact that when urban waterlogging occurs, the ground is covered by water and the location of the sewer well cannot be directly seen, the current method is to manually find the sewer well. This not only has low locating efficiency, but also risks people falling into the sewer well.

### SUMMARY

The purpose of the examples of the present disclosure is to provide a method and an apparatus for determining a position of a target, an electronic device and a storage medium, so as to improve the efficiency of positioning a target in an image. The specific technical solutions are as follows:
In a first aspect, an example of the present disclosure provides a method for determining a position of a target, the method includes:
acquiring a real image of a target scene and a virtual image of the target scene;
projecting the real image to the virtual image to generate a fused image;
determining a position of a preset target located in the virtual image in the real image based on the fused image.

Optionally, projecting the real image to the virtual image to generate the fused image includes:
projecting the real image to the virtual image with a first transparency to generate the fused image; wherein the first transparency is greater than a second transparency of the virtual image.

Optionally, determining the position of the preset target located in the virtual image in the real image based on the fused image includes:
covering the fused image with the preset target to obtain the position of the preset target in the real image.
Optionally, the virtual image further includes a tag corresponding to the preset target, wherein the tag indicates a position of the preset target in the virtual image;
determining the position of the preset target located in the virtual image in the real image based on the fused image includes:
   covering the fused image with the tag;
   determining the position of the preset target in the real image based on the tag.

Optionally, determining the position of the preset target located in the virtual image in the real image based on the fused image includes:
identifying the preset target in the fused image to obtain the position of the preset target located in the virtual image in the real image.

Optionally, acquiring the real image of the target scene and the virtual image of the target scene includes:
acquiring a real image of a target scene and a panoramic image including the target scene; acquiring a first PTZ value of a target dome camera that shoots the real image; determining a first projection coordinate in the panoramic image corresponding to the first PTZ value, based on the first PTZ value and a predetermined correspondence between PTZ values of the target dome camera and projection coordinates of the panoramic image; obtaining the virtual image of the target scene from the panoramic image based on the first projection coordinate;
   or,
acquiring a panoramic image including the target scene; changing a display perspective of the panoramic image to the target scene in response to a user operation, and determining a second projection coordinate in the panoramic image after changing the perspective, based on the second projection coordinate and a predetermined correspondence between PTZ values of the target dome camera and projection coordinates of the panoramic image, determining a second PTZ value of the target dome camera corresponding to the second projection coordinate, and controlling the target dome camera to move according to the second PTZ value, and acquiring a real image collected by the moved target dome camera.

Optionally, the method further includes:
receiving an operation on a boundary identifier in the fused image, wherein the operation indicates a target direction;
in response to the operation, controlling the boundary identifier to move along the target direction;
in response to the movement of the boundary identifier along the target direction, reducing a screen size of one of the fused image and the virtual image and increasing a screen size of the other one of the fused image and the virtual image along the target direction.

Optionally, the screen size of the virtual image is increased by increasing a transparency of the real image to 100%, and the screen size of the fused image is increased by reducing a transparency of the real image.

Optionally, the preset target serves as a height scale based on a ground in the virtual image.

In a second aspect, an example of the present disclosure provides an apparatus for determining a position of a target, the apparatus includes:
an image acquisition module, configured to acquire a real image of a target scene and a virtual image of the target scene;
an image fusion module, configured to project the real image to the virtual image to generate a fused image;
a position determination module, configured to determine a position of a preset target located in the virtual image in the real image based on the fused image.

Optionally, the image fusion module includes:
an image fusion unit, configured to project the real image to the virtual image with a first transparency to generate the fused image; wherein the first transparency is greater than a second transparency of the virtual image.

The position determination module includes:
a first position determination unit, configured to cover the fused image with the preset target to obtain the position of the preset target in the real image.

The virtual image further includes a tag corresponding to the preset target, wherein the tag indicates a position of the preset target in the virtual image;
the position determination module includes:
a tag covering unit, configured to cover the fused image with the tag;
a second position determination unit, configured to determine the position of the preset target in the real image based on the tag.

The position determination module includes:
a position identification unit, configured to identify the preset target in the fused image to obtain the position of the preset target located in the virtual image in the real image.

The image acquisition module includes:
a first acquisition unit, configured to acquire a real image of a target scene and a panoramic image including the target scene; acquire a first PTZ value of a target dome camera that shoots the real image; determine a first projection coordinate in the panoramic image corresponding to the first PTZ value, based on the first PTZ value and a predetermined correspondence between PTZ values of the target dome camera and projection coordinates of the panoramic image; obtain the virtual image of the target scene based on the first projection coordinate from the panoramic image;
   or,
a second acquisition unit, configured to acquire a panoramic image including the target scene; change a display perspective of the panoramic image to the target scene in response to a user operation, and determine a second projection coordinate in the panoramic image after changing the perspective, based on the second projection coordinate and a predetermined correspondence between PTZ values of the target dome camera and projection coordinates of the panoramic image, determine a second PTZ value of the target dome camera corresponding to the second projection coordinate, and control the target dome camera to move according to the second PTZ value, and acquire a real image collected by the moved target dome camera.

The apparatus further includes:
an operation receiving module, configured to receive an operation on a boundary identifier in the fused image, wherein the operation indicates a target direction;
an identifier movement module, configured to control the boundary identifier to move along the target direction in response to the operation;
a screen size changing module, configured to reduce a screen size of one of the fused image and the virtual image and increase a screen size of the other one of the fused image and the virtual image along the target direction in response to the movement of the boundary identifier along the target direction.

Wherein, the screen size of the virtual image is increased by increasing a transparency of the real image to 100%, and the screen size of the fused image is increased by reducing a transparency of the real image.

The preset target serves as a height scale based on a ground in the virtual image.

In a third aspect, an example of the present disclosure provides an electronic device including a processor, a communication interface, a memory, and a communication bus, wherein the processor, the communication interface, and the memory communicate with each other through the communication bus;
the memory, configured to store a computer program;
the processor, configured to carry out any of the method according to the first aspect when carrying out the program stored in the memory.

In a fourth aspect, an example of the present disclosure provides a computer-readable storage medium, having stored therein a computer program that, when executed by a processor, causes the processor to carry out any of the method according to the first aspect.

In a fifth aspect, an example of the present disclosure provides a computer program product including instructions, which, when running on a computer, when running on a computer, causes the computer to carry out any of the method according to the first aspect.

The examples of the present disclosure bring the following beneficial effects.

In the solution provided by the examples of the present disclosure, since both the real image and the virtual image are images of the target scene, the preset target in the virtual image will have a corresponding position in the real image. When the position of the preset target in the real image is blocked by a person or an object appearing in a real scene, for example, when a manhole cover in the road of the target scene is covered with water due to waterlogging, the real image of the target scene in which the present target is covered, is projected to the virtual image of the target scene to obtain a fused image with one-to-one overlapping positions, and the corresponding position of the preset target in the virtual image is identified from the fused image, so that a manager can determine the position of the preset target in the current screen, thereby quickly and accurately locating the preset target, which can greatly improve target positioning efficiency. Of course, carrying out any product or method of the present disclosure does not require achieving all the above-mentioned advantages simultaneously.

### BRIEF DESCRIPTION OF THE DRAWINGS

In order to more clearly describe the technical solutions of the examples of the disclosure and the prior art, accompanying drawings that need to be used in the examples and the prior art will be briefly described below. Obviously, accompanying drawings described below are for only some of examples of the disclosure. Those skilled in the art may also obtain other accompanying drawings based on these accompanying drawings without any creative efforts.
FIG. 1 is a flow chart of a method for determining a position of a target provided by an example of the present disclosure;
FIG. 2 is a schematic diagram of a display screen based on the example shown in FIG. 1;
FIG. 3 is another schematic diagram of a display screen based on the example shown in FIG. 1;
FIG. 4 is a flow chart of a screen size changing method based on the example shown in FIG. 1;
FIG. 5(a) is another schematic diagram of a display screen based on the example shown in FIG. 4;
FIG. 5(b) is another schematic diagram of a display screen based on the example shown in FIG. 4;
FIG. 6 is a flow chart of the video projection method based on the example shown in FIG. 1;
FIG. 7(a) is another schematic diagram of a display screen based on the example shown in FIG. 4;
FIG. 7(b) is another schematic diagram of a display screen based on the example shown in FIG. 4;
FIG. 8 is a flow chart of a height scale display method based on the example shown in FIG. 1;
FIG. 9 is a schematic diagram of a display screen based on the example shown in FIG. 8;
FIG. 10 is a schematic structural diagram of an apparatus for determining a position of a target provided by an example of the present disclosure;
FIG. 11 is a schematic structural diagram of an electronic device provided by an example of the present disclosure.

### DETAILED DESCRIPTION

In order to make the objective, technical solutions and advantages of the disclosure clearer and more understandable, the disclosure will be described in more detail below with reference to the accompanying drawings and examples. Obviously, the described examples are only some, and not all, of the examples of the disclosure. All other examples obtained based on the examples of the disclosure by those skilled in the art without any creative efforts fall into the scope of protection of the disclosure.

In order to improve target positioning efficiency, an example of the present disclosure provides a method and an apparatus for determining a position of a target, an electronic device, and a storage medium. The following firstly introduces a method for determining a position of a target provided by an example of the present disclosure.

An example of the present disclosure provides a method for determining a position of a target, which can be applied to any electronic device that needs to determine a position of a target in an image, for example, the electronic device can be a laptop computer, a tablet computer, a mobile phone, etc., which are not specifically limited herein, for the sake of clarity, hereafter referred to as an electronic device. The electronic device can be communicatively connected with an image collection device to obtain images and/or videos collected by the image collection device. Wherein, the image collection device may be an image collection device capable of changing the acquisition angle of view, such as a dome camera.

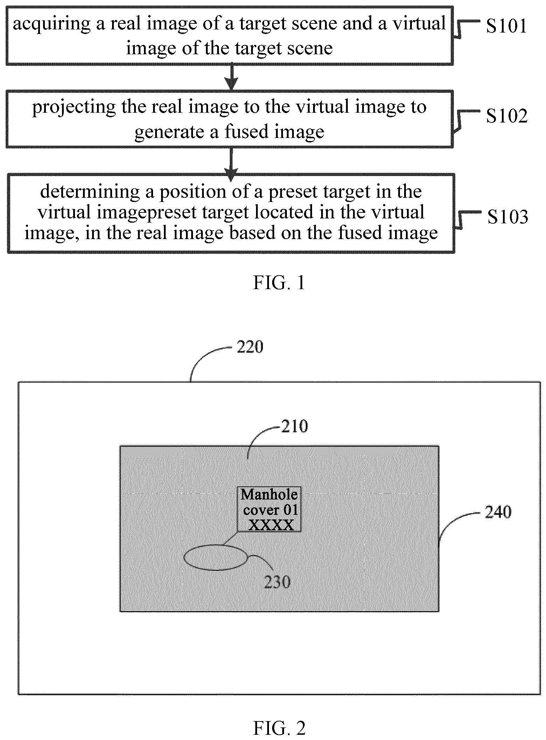

As shown in FIG. 1, a method for determining a position of a target includes:
S 101. acquiring a real image of a target scene and a virtual image of the target scene;
Wherein, the real image can be an image collected by the image collection device for the target scene, or a video image in a video collected by the image collection device for the target scene, which are both reasonable. In an example, the video may be a real-time video collected by the image collection device for the target scene. The virtual image can be an image part in a panoramic image corresponding to the target scene, or an image of the target scene acquired in advance, as long as a preset target in the virtual image is not blocked. The panoramic image may be a 360 or 720 panoramic image, also known as a VR (Virtual Reality) panorama, or a panoramic image from other angles, which is not specifically limited here.

For example, the panoramic image can be a panoramic image including multiple target scenes such as a crossing A, a bus stop B, a shopping mall C, etc., the target scene to be viewed can be selected according to actual needs. For example, when there is need to view whether there is a preset target such as a manhole cover at the crossing A, a real image of the crossing A can be acquired and a panoramic image including the crossing A can be acquired simultaneously, and then a virtual image corresponding to the crossing A from the panoramic image is found and processed subsequently.

As an example, in order to generate a panoramic image, an electronic device can acquire multiple images taken by a target dome camera in the area where a target scene is located, wherein the multiple images can include images taken by the target dome camera rotating 360 degrees, so that the multiple images can include all content in the target scene.

In order to facilitate image collection, multiple preset points can be set in advance according to the shooting field angle of view of the target dome camera, the multiple preset points can correspond to PTZ (Pan/Tilt/Zoom) values of the target dome camera, so that after the target dome camera rotates to each of the preset points, the collected images can include all the contents of the current scene. The electronic device can control the target dome camera to rotate according to the preset points, that is, to rotate to each of the preset points respectively.

While the target dome camera rotates according to the preset points, it will collect one image every time it rotates to one preset point, so that the electronic device can acquire images collected by the target dome camera at the respective preset points, and thus obtain the above-mentioned multiple images. After acquiring the multiple images, the electronic device can synthesize the multiple images into a panoramic image. Wherein, the specific mode of synthesizing the panoramic image can adopt any one of panoramic image synthesis modes in the field of image processing, and will not be specifically limited or explained here.

S102. projecting the real image to the virtual image to generate a fused image;
S103. determining a position of a preset target located in the virtual image in the real image based on the fused image.

Since both the real image and the virtual image are images of the target scene, the preset target in the virtual image will have a corresponding position in the real image. When the position of the preset target in the real image is blocked by a person or an object appearing in a real scene, for example, when a manhole cover in the road of the target scene is covered with water due to waterlogging, the real image of the target scene in which the present target is covered, is projected to the virtual image of the target scene to obtain a fused image with one-to-one overlapping positions, and the corresponding position of the preset target in the virtual image is identified from the fused image, so that a manager can determine the position of the preset target in the current screen, thereby quickly and accurately locating the preset target, which can greatly improve target positioning efficiency; while, the real-time situation of the target scene can be learnt.

For example, when urban waterlogging occurs, a manhole cover in the real image is submerged in water and cannot be seen, the electronic device can project the real image to a virtual image where the manhole cover is not blocked, to generate a fused image, and further, determine the position of the manhole cover in the virtual image in the real image based on the fused image, thereby quickly and accurately locating the manhole cover.

As an example, in order to facilitate projecting a real image to a virtual image, a correspondence between viewing angle parameters of an image collection device and projection coordinates can be established in advance, and the electronic device can determine the projection coordinates according to the current viewing angle parameters of the image collection device and the correspondence, and further perform a video projection according to the projection coordinates.

Wherein the projection coordinates are coordinates that identify the corresponding position of the real image in the virtual image. For example, in case of that the real image is a rectangular area, the projection coordinates can be coordinates that can identify the corresponding position of the rectangular area in the virtual image. For example, the projection coordinates can be coordinates corresponding to each vertex of the rectangular area in the virtual image; in case of that the length and width of the rectangular area are fixed, the projection coordinates can be coordinates corresponding to the center point of the rectangular area in the virtual image.

For the case where the image collection device is the above-mentioned target dome camera, a correspondence between PTZ values of the target dome camera and the projection coordinates can be established in advance, during the synthesis process of the above panoramic image, due to the fact that the center point of the collected images after the target dome camera rotates to various angles can be determined in the panoramic, the corresponding position of the center point of the collected images in the panoramic image can be the projection coordinates, so that multiple data pairs can be obtained: the PTZ values of the target dome camera - the projection coordinates in the panoramic image. Furthermore, based on these multiple sets of data pairs, the correspondence between the projection coordinates in the panoramic image and the PTZ values of the target dome camera can be determined through fitting and other algorithms.

The electronic device can determine the projection coordinates based on the current PTZ values of the target dome camera and the correspondence, and further perform a video projection according to the projection coordinates. In an example, since the real image is an image collected when the target dome camera is at the current PTZ values, the real image must correspond to a part of the virtual image, so as long as a pair of corresponding positions are found between the two, based on the positions, the real image can be superimposed on the virtual image to complete the video projection.

The above-mentioned correspondence between the pre-established projection coordinates and the PTZ values of the target dome camera can represent the correspondence between the center point of the image collected when the target dome camera is at each of the PTZ values and the projection coordinates, then the electronic device can overlap the center point of the real image with the projection coordinates in the virtual image to superimpose the real image on the virtual image to generate a fused image.

Since the preset target in the virtual image is not blocked, after the fused image is generated by projecting the real image to the virtual image, the position of the preset target in the real image further can be determined based on the fused image. In an example, the above-mentioned electronic device can be a server, and a manager can see the position of the preset target (manhole cover) in the real image in the current screen displayed by the server, thereby remotely assisting the staff in the target scene in quickly finding the manhole cover that is submerged in the water, and further the staff can carry out drainage inspection, dredging and other operations on the manhole cover. Wherein, the manager and the staff in the target scene can communicate through voice calls, video calls, etc., so that the staff can quickly find the manhole cover that is submerged in the water.

In another example, the above-mentioned electronic device can be a terminal, and a staff may carry the terminal for work. The staff can see the position of the preset target (manhole cover) in the real image in the current screen displayed on the terminal, and further quickly find the manhole cover submerged in the water based on its own position in the real image, furthermore, the staff can carry out drainage inspection, dredging and other operations on the manhole cover.

As an example of the present disclosure, the above-mentioned step of projecting the real image to the virtual image to generate a fused image may include:
projecting the real image to the virtual image with a first transparency to generate the fused image. Wherein, the first transparency is greater than a second transparency of the virtual image.

In this example, the electronic device can superimpose the real image with the first transparency on the virtual image for display, and the first transparency is greater than the second transparency of the virtual image, that is, a transparency of the real image is greater, and the real image does not cover the virtual image. In this way, in terms of visual effects, a preset target in the virtual image can be displayed in a screen of the real image through the real image. Wherein the first transparency can be set according to an actual display requirement, as long as it is greater than the second transparency of the virtual image, for example, it can be 50%, 60%, 35%, etc., and is not specifically limited here. Of course, since excessive first transparency will result in the inability to clearly distinguish the content in the real image, it is not appropriate to set the first transparency to an excessively large value.

In an example, the second transparency of the virtual image may generally be 0%, that is, the virtual image may be displayed with an opaque effect. For example, in a display screen shown in FIG. 2, a real image 210 is superimposed on a virtual image 220 with a first transparency to generate a fused image 240, and a preset target 230 in the virtual image 220 can be displayed through a screen of the real image 210 in the real image. At this time, even if the preset target is covered in the real image 210, the user can still clearly see the preset target 230 in the current screen. It is assumed that the preset target 230 is a manhole cover, which is covered by the water in the real image 210 and cannot be seen by the user. Since the real image 210 is superimposed on the virtual image 220 with the first transparency, and the virtual image 220 is displayed with the opaque effect, and the manhole cover therein is not blocked, the user can see the manhole cover in the virtual image 220 through the screen of the real image 210.

As an example of the present disclosure, the above step of determining the position of the preset target located in the virtual image in the real image based on the fused image may include:
covering the fused image with the preset target to obtain the position of the preset target in the real image.

After acquiring the above virtual image, target detection can be performed on the virtual image to determine the position of the preset target, and further an image of the preset target located in the virtual image can be cut out by means of cutout, for example, the preset target is a manhole cover, an electronic device can perform target detection on the virtual image, to determine the position of the manhole cover, and further cuts out the image of the manhole cover.

In this way, when the real image is projected to the virtual image to generate a fused image, the image of the preset target can be kept at the top, that is, the fused image can be covered by the preset target. In an example, a manager can see the preset target in the current fused image, thereby determining the position of the preset target in the real image.

It can be seen that in this example, the electronic device can cover the fused image with the preset target to obtain the position of the preset target in the real image, since the preset target covers the fused image, even if the preset target is covered in the real image, the users can further determine the position of the preset target in the real image.

As an example of the present disclosure, the above-mentioned virtual image may also include a tag corresponding to the preset target, wherein the tag indicates the position of the preset target in the virtual image.

After the electronic device identifies the position of the preset target in the virtual image, it can set a tag corresponding to the preset target, and the tag indicates the position of the preset target in the virtual image, for example, the tag has an arrow or other indicator, which points to the position of the preset target, so that the position of the preset target in the real image can be known based on the arrow or other indicator in the fused image later. Optionally, the tag of the preset target may include identifying patterns, text, etc., which are not specifically limited here. Taking the preset target as a manhole cover as an example, the tag may include information related to the manhole cover, for example, it may include the type of manhole cover, the name of a road where it is located, the manhole cover serial number, etc. The tag can further include reminder text such as "This is a manhole cover", "I am here", etc., which are not specifically limited here.

Correspondingly, the above step of determining the position of the preset target located in the virtual image in the real image based on the fused image may include:
covering the fused image with the tag; determining the position of the preset target in the real image based on the tag.

After projecting the real image to the virtual image to generate the fused image, the electronic device can cover the fused image with the tag of the preset target. As an example, the electronic device can always display the tag of the preset target at the top of the current screen, so that the tag can further cover the fused image.

Furthermore, since the tag indicates the position of the preset target in the virtual image, the position of the preset target in the real image can be determined based on the tag. In an example, since the tag covers the fused image, the user can see the tag in the current screen, and can further determine the position of the preset target in the real image based on the position indicated by the tag.

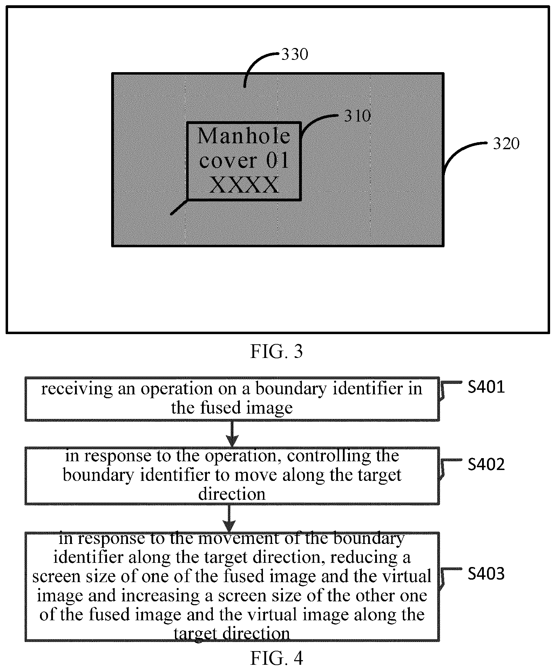

For example, in the display screen shown in FIG. 3, the tag 310 of the preset target covers the fused image 320. In this way, even if the preset target in the real image 330 is blocked and cannot be seen, the tag 310 of the preset target covers the fused image 320, so the position of the preset target in the real image 330 can further be determined based on the tag 310. Wherein the tag 310 may include reminder text: manhole cover 01 XXXX.

It can be seen that in this example, the tag corresponding to the preset target can be displayed in the virtual image. In this case, the electronic device can cover the fused image with the tag, and further determine the position of the preset target in the real image based on the tag. In this way, the position of the preset target in the real image can be accurately and quickly positioned by covering the fused image with the tag corresponding to the preset target.

Regarding the above-mentioned case of projecting the real image to the virtual image with the first transparency, the above-mentioned step of determining the position of the preset target located in the virtual image in the real image based on the fused image may include:
identifying the preset target in the fused image to obtain the position of the preset target located in the virtual image in the real image.

Since the real image is projected to the virtual image with the first transparency, the preset target in the virtual image can be displayed through the real image in the fused image, in order to determine the position of the preset target in the real image, the electronic device can use any target recognition algorithm to recognize the fused image to identify the preset target within it, and further can obtain the position of the preset target located in the virtual image in the real image.

Wherein the position of the preset target in the real image may specifically be coordinates of an identification frame indicating the area where the preset target is located, etc., and is not specifically limited here. For example, the preset target is a manhole cover, the electronic device can identify the manhole cover from the fused image, determine an identification frame that can frame the manhole cover, and further determine the coordinates of the identification frame, for example, it can be coordinates of two diagonal corners of the identification frame, etc., which can be used as the position of the manhole cover.

It can be seen that in this example, for the above-mentioned case of projecting the real image to the virtual image with the first transparency, the electronic device can identify the preset target in the fused image to obtain the position of the preset target located in the virtual image in the real image, so that the position of the preset target can be accurately located.

As an example of the present disclosure, the above-mentioned step of acquiring the real image of the target scene and the virtual image of the target scene may include any of the following methods:
In the first method, acquiring a real image of a target scene and a panoramic image including the target scene; acquiring a first PTZ value of a target dome camera that shoots the real image; determining a first projection coordinate in the panoramic image corresponding to the first PTZ value, based on the first PTZ value and the predetermined correspondence between the PTZ value of the target dome camera and a projection coordinate of the panoramic image; obtaining the virtual image of the target scene from the panoramic image based on the first projection coordinate.

The electronic device can acquire a real image of a target scene and a panoramic image including the target scene, and the panoramic image can be a pre-acquired panoramic image including the target scene, that is, a historical panoramic image. The historical panoramic image can be synthesized based on multiple images including the target scene collected in advance by the target dome camera. In case that if the preset target in the real image is blocked, an alarm can be triggered at this time, so that the electronic device can retrieve the pre-acquired historical panoramic image including the target scene.

Furthermore, the electronic device can acquire a first PTZ value of the target dome camera that captured the real image, and the first PTZ value determines the specific viewing angle for the real image. In order to determine which part of the panoramic image the real image corresponds to, the electronic device can search for a first projection coordinate in the panoramic image corresponding to the first PTZ value, based on the first PTZ value, from the above correspondence between the predetermined PTZ value of the target dome camera and the projection coordinate of the panoramic image.

For example, the first PTZ value of the target dome camera is PTZ a1. In the above correspondence, the projection coordinate of the panoramic image corresponding to PTZ a1 is coordinate a, then the electronic device can determine that the first projection coordinate of the panoramic image corresponding to the first PTZ value is coordinate a.

Wherein the first projection coordinate is a corresponding position in the panoramic image of the center point of the image collected when the PTZ value of the target dome camera is the first PTZ value. Therefore, after determining the first projection coordinate, the electronic device can obtain the virtual image of the target scene from the panoramic image based on the first projection coordinate. Specifically, the electronic device can take the first projection coordinate as the center point, intercept an image from the panoramic image that is not smaller than the size of the real image, to obtain the virtual image of the target scene.

In the second method, acquiring a panoramic image including the target scene; changing a display perspective of the panoramic image to the target scene in response to a user operation, and determining a second projection coordinate in the panoramic image after changing the perspective; based on the second projection coordinate and the predetermined correspondence between PTZ values of the target dome camera and projection coordinates of the panoramic image, determining a second PTZ value of the target dome camera corresponding to the second projection coordinate, and controlling the target dome camera to move according to the second PTZ value, and acquiring a real image collected by the moved target dome camera.

An electronic device can acquire a panoramic image including a target scene, and the panoramic image can further be a pre-acquired panoramic image including the target scene, that is, a historical panoramic image. It can be synthesized from multiple images including the target scene collected in advance by the target dome camera.

After acquiring the panoramic image, the electronic device can display the panoramic image for a user to view. When the user wants to view a real image corresponding to a target scene, the panoramic image can be operated to change the display perspective of the panoramic image to the target scene, for example, the user can drag the panoramic image to rotate the target scene in the panoramic image to center of the screen.

Next, the electronic device can determine a second projection coordinate in the panoramic image after changing the perspective, wherein since the user generally adjusts the perspective to be viewed in the target scene to the center of the screen, the electronic device can determine a center point of the panoramic image after changing the perspective as the second projection coordinate. Furthermore, based on the second projection coordinate, a PTZ value corresponding to the second projection coordinate can be found in the above-mentioned predetermined correspondence between the PTZ values of the target dome camera and the projection coordinates of the panoramic image, and the PTZ value is the second PTZ value of the target dome camera.

If the target dome camera moves to the position indicated by the second PTZ value, the collected real image is a real image of the target scene, so the electronic device can control the target dome camera to move according to the second PTZ value and acquire the real image collected by the moved target dome camera, that is, the real image of the target scene.

It can be seen that in this example, the electronic device can obtain a virtual image of the target scene from a panoramic image based on the PTZ value of the target dome camera, or can control the movement of the target dome camera according to the operation of the user, thereby acquiring a real image of the target scene that the user wants to view. No matter which method is used, the real image and virtual image that meet the user's needs can be acquired, which can ensure that the position of the preset target can be accurately located subsequently.

As an example of the present disclosure, as shown in FIG. 4, the above method may further include:
S401. receiving an operation on a boundary identifier in the fused image;
wherein the operation indicates a target direction;
S402. in response to the operation, controlling the boundary identifier to move along the target direction;
S403. in response to the movement of the boundary identifier along the target direction, reducing a screen size of one of the fused image and the virtual image and increasing a screen size of the other one of the fused image and the virtual image along the target direction.

After an electronic device determines a position of a preset target located in a virtual image in a real image, it can provide a boundary identifier in the fused image, and the boundary identifier distinguishes a fused image area from a virtual image area; a user can perform an operation on the boundary identifier in the fused image, such as dragging, clicking, long pressing, etc., which are not specifically limited here. This operation indicates a target direction so that the boundary identifier moves along the target direction, for example, it can move to the left side of an interface, to the right side of the interface, to the top of the interface, or to the bottom of the interface. After receiving an operation on the boundary identifier in the fused image, the electronic device can control the boundary identifier to move along the target direction indicated by the operation in response to the operation.

The electronic device can reduce a screen size of one of the fused image and virtual image and increase a screen size of the other one of the fused image and virtual image along the target direction in response to the movement of the boundary identifier along the target direction.

For example, the user can click on the boundary identifier in the interface, and each time a user's clicking operation on the boundary identifier is detected, the fused image screen will be reduced by a preset size in the target direction, and the virtual image screen will be increased by the preset size. For example, each time a user's clicking operation on the boundary identifier is detected, the fused image screen is reduced by 10% to the left side of the interface, and the virtual image screen is increased by 10%.

In this way, the user can change the screen size of the fused image and the virtual image by operating the boundary identifier to view the fused image and virtual image that they want to view, thereby comparing the fused image screen with the virtual image screen, and can verify whether the position of the preset target is determined correctly through comparison, and can further more intuitively view the position of the preset target in the real image, and can obtain more information from the virtual image.

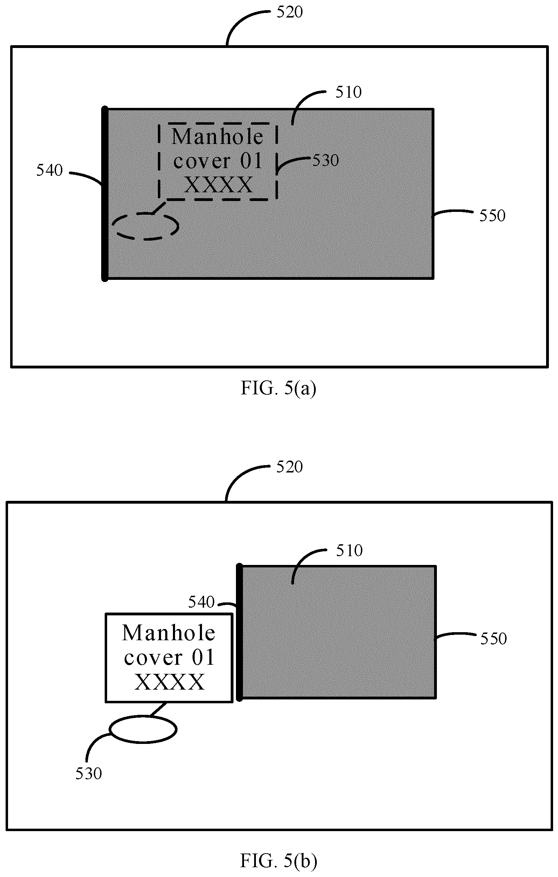

For example, in the display screen shown in FIG. 5(a), a real image 510 is superimposed on a virtual image 520 for display. After a position of a preset target 530 in the virtual image 520 is determined, a boundary identifier 540 can be provided in a fused image 550, that is, the boundary line on the left side of the fused image 550. In FIG. 5(a), the preset target 530 is shown in the form of a dotted line, indicating that it is in a blocked state. The user can operate on the boundary identifier 540 in the interface. After detecting the operation issued by the user, an electronic device can control the boundary identifier 540 to move along a target direction in response to the operation, and can change a screen size of the fused image 550 and the virtual image 520 in response to the movement of the boundary identifier 540 along the target direction. The changed display screen is shown in FIG. 5(b), the screen size of the fused image 550 is reduced, and the preset target 530 can be seen in the current screen. The preset target 530 is shown in solid line form in FIG. 5(b), indicating that it is not blocked in the virtual image 520. The user can verify whether the position of the preset target 530 is determined correctly by comparing the fused image 550 and the virtual image 520, and can further more intuitively view the position of the preset target 530 in the real image 510, and can further obtain more information from the virtual image 520.

It can be seen that in this example, the electronic device can receive an operation on the boundary identifier in the fused image, the electronic device can control the boundary identifier to move along the target direction in respond to the operation, and reduce the screen size of one of the fused image and the virtual image along the target direction, and increase the screen size of the other one of the fused image and the virtual image along the target direction in response to the movement of the boundary identifier along the target direction. In this way, the user can verify whether the position of the preset target is determined correctly through comparison, and can further more intuitively view the position of the preset target in the real image, and can obtain more information from the virtual image.

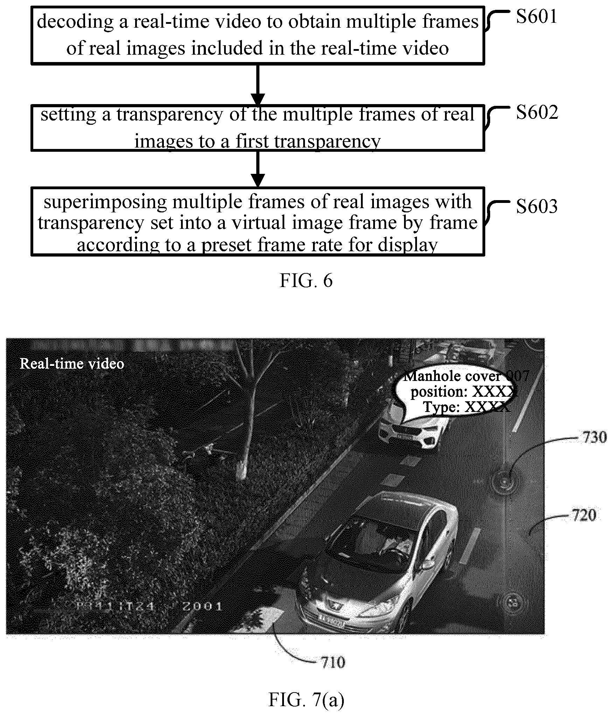

As an example of the present disclosure, as shown in FIG. 6, the above-mentioned step of projecting the real image to the virtual image with the first transparency may include:
S601. decoding a real-time video to obtain multiple frames of real images included in the real-time video;
An electronic device can decode the real-time video collected by an image collection device, thereby obtaining multiple frames of real images included in the real-time video. Wherein the decoding mode can be determined according to the specific encoding mode of the real-time video collected by the image collection device, as long as it can be decoded to obtain multiple frames of real images included in the real-time video, which is not specifically limited here.
S602. setting a transparency of the multiple frames of real images to a first transparency;
S603. superimposing multiple frames of real images with the set transparency into a virtual image frame by frame according to a preset frame rate for display.

After obtaining multiple frames of real images included in the real-time video, the electronic device can set the transparency of the multiple frames of real images to the first transparency. Furthermore, the multiple frames of real images with the set transparency are superimposed into the virtual image frame by frame according to the preset frame rate for displaying, thus achieving the effect of the real image being displayed in the virtual image with the first transparency.

As a real-time mode, the above process can be achieved through a plug-in-free player. Specifically, the real-time video can be streamed and decoded through a decoder to obtain multiple frames of real images, and then the multiple frames of real images can be pushed to canvas for rendering, the canvas can perform image rendering processing at a preset frame rate such as 30 frames per second, to change the transparency of the canvas to the first transparency, and further play the processed image to achieve the purpose of fusing the real image with the historical panoramic image, that is, achieving the effect of superimposing the real image with the first transparency in the virtual image for display.

It can be seen that in this example, the electronic device can decode the real-time video to obtain multiple frames of real images included in the real-time video, set the transparency of the multiple frames of real images to the first transparency, and further superimpose the multiple frames of real images with the set transparency according to the preset frame rate on the virtual image frame by frame for display, which can effectively achieve the effect of superimposing the real image with the first transparency in the virtual image, making it convenient for the user to view the preset target and accurately locate the position of the preset target.

As an example of the present disclosure, the above-mentioned mode of changing the screen size of the real image and the fused image may include:
the screen size of the virtual image is increased by increasing a transparency of the real image to 100%, and the screen size of the fused image is increased by reducing a transparency of the real image.

In order to facilitate user operation, a boundary identifier can be set in a fused image. When the user performs an operation such as dragging on the boundary identifier to indicate a target direction, it means that the user wants to change the screen size of the fused image. Then, when an electronic device detects that the user performs an operation such as dragging on the boundary identifier to indicate the target direction, it can change the boundary position of the fused image and the virtual image in accordance with the target direction indicated by the operation. In this way, the screen size of the fused image and the virtual image will further change following the dragging operation issued by the user.

In an example, the electronic device can increase a screen size of a virtual image by increasing a transparency of a real image to 100%, and increase a screen size of a fused image by reducing a transparency of the real image. The transparency of the real image is increased to 100%, then the real image will be displayed in a completely transparent state, and the virtual image below can be revealed, thereby achieving the purpose of increasing the screen size of the virtual image. Correspondingly, if the transparency of the real image is reduced, the real image will be displayed in an incomplete transparency state, and the virtual image below can be blocked, thereby achieving the purpose of increasing the screen size of the fused image.

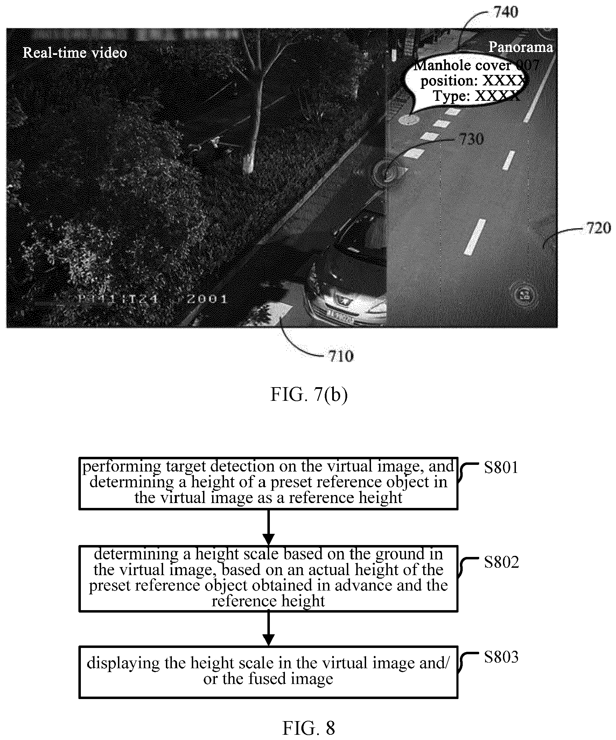

For example, in the display screen shown in FIG. 7(a), a fused image 710 is located on the left side of a boundary identifier 730, and a tag of a preset target is displayed in the fused image 710, wherein the tag includes text information "Manhole cover 007 position: XXXX Type: XXXX". According to the tag, it can be determined that the preset target is located under a white vehicle and blocked in the fused image 710. A virtual image 720 is located on the right side of the boundary identifier 730. While, the user can perform a dragging operation on the boundary identifier 730 (the boundary line in FIG. 7(a)), for example, the user can hold the boundary identifier 730 and drag it to the left side of the screen. While, the electronic device detects the dragging operation issued by the user, following the target direction indicated by the dragging operation, that is, the left side of the screen, reduces the fused image 710 on the left side of the screen, and accordingly increases the virtual image 720 on the right side of the screen; for example, increases a transparency of the screen of the real image of the fused image 710 on the right side of the screen to 100%. In this way, the real image is completely transparent and the virtual image 720 is fully visible, thereby achieving the effect of increasing the screen of the virtual image 720. As shown in FIG. 7(b), the user can see the manhole cover and its tag 740 in the virtual image 720.

The user can drag the boundary position of the screen of the fused image 710 to just expose the manhole cover and its tag. This allows the user to compare the screen of the fused image with the manhole cover and its tag in the virtual image and quickly and accurately verify whether the position of the manhole cover is determined accurately.

In an example, the user can drag the boundary identifier back and forth, for example, for the above example, the user can hold the boundary identifier 730 and drag it left and right, so that the screen size of the fused image and the virtual image repeatedly increases and decreases following the dragging operation, during this process, the user can quickly and accurately verify whether the position of the manhole cover is determined accurately by comparing the screen of the fused image with the manhole cover and its tag in the virtual image.

It can be seen that in this example, the electronic device increases the transparency of the real image to 100% to increase the screen size of the virtual image, and decreases the transparency of the real image to increase the screen size of the fused image. Furthermore, the user can quickly and accurately verify whether the position of the preset target is determined accurately by more conveniently comparing the screen of the fused image with the preset target and/or its tag in the virtual image.

As an example of the present disclosure, the above-mentioned preset target can serve as a height scale based on the ground in the above-mentioned virtual image. In this case, as shown in FIG. 8, the above method may further include:
S801. performing target detection on the virtual image, and determining a height of a preset reference object in the virtual image as a reference height;
In order to facilitate users to determine the water level when urban waterlogging occurs, a height scale can be displayed in the interface. That is to say, the above-mentioned preset target can serve as a height scale based on the ground in the virtual image. In order to determine the height scale, the electronic device can perform target detection on the virtual image to determine the height of the preset reference object in the virtual image as a reference height. Wherein, the preset reference object can be a step, a bench, a stone pier and other object with known actual heights.

In an example, the electronic device can use an edge detection algorithm to detect an upper edge and a lower edge of the preset reference object in the virtual image, and further determine the height of the preset reference object in the virtual image based on the distance between the upper edge and the lower edge, that is, the reference height.

S802. determining a height scale based on the ground in the virtual image, based on an actual height of the preset reference object obtained in advance and the reference height;
After determining the reference height of the preset reference object in the virtual image, the electronic device can determine the scale of the virtual image based on the actual height of the preset reference object acquired in advance, that is, the ratio between the object in the virtual image and the actual object.

For example, if the preset reference object is a step, the electronic device determines that the reference height of the step in the virtual image is 0.5 cm, and the actual height of the step acquired in advance is 10 cm, the electronic device can determine that the ratio between the object in the virtual image and the actual object is: 0.5/10=1:20.

Furthermore, the electronic device can determine the height scale based on the ground in the virtual image based on the ratio, for example, if the electronic device determines that the ratio between the object in the virtual image and the actual object is 1:20, the height scale A can be determined, 1 cm in the height scale A corresponds to an actual height of 20 cm. For example, the height of height scale A is 5 cm, and every 5 mm corresponds to the actual height of 10 cm, the actual height corresponding to every 5 mm can be marked in height scale A, that is, 10 cm, 20 cm, 30 cm...90 cm, 1 meter.

S803. displaying the height scale in the virtual image and/or the fused image.

The electronic device can display the above-mentioned height scale in the virtual image and/or the fused image, so that the user can see the height scale in the current screen, further can compare the height of the water surface in the fused image with the height scale, to determine the approximate height of the water surface.

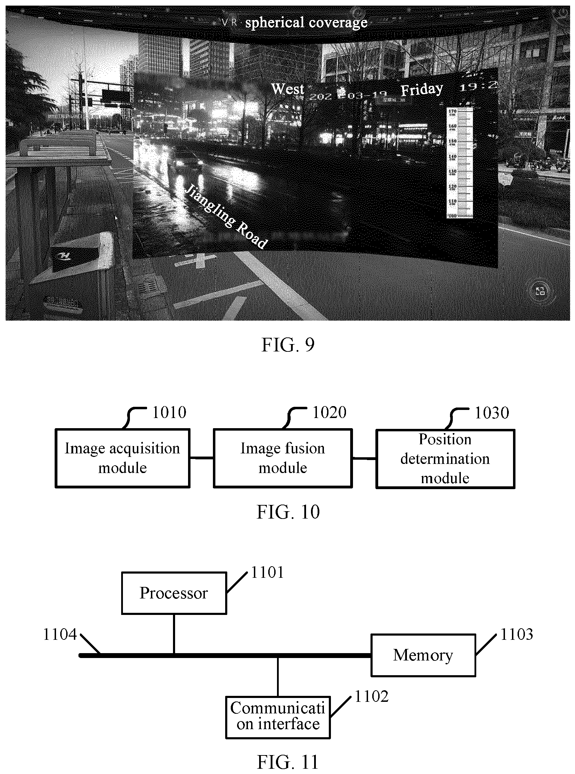

For example, in the display interface shown in FIG. 9, a height scale can be displayed on the right side of the screen of the fused image, and the height in the height scale is based on the ground, so that if the ground in the screen of the fused image is covered with water, when viewing, the user can compare the water surface in the fused image with the height scale, and further determine the actual height of the water level in the target scene in the fused image.

It can be seen that in this example, the electronic device can perform target detection on the virtual image to determine the height of the preset reference object in the virtual image as the reference height, determine a height scale based on the ground in the virtual image based on the actual height acquired in advance and the reference height of the preset reference object, further the height scale is display in the virtual image and/or the fused image. In this way, in case that the ground in the fused image is covered with water, that is, when urban waterlogging occurs, the user can compare the water surface in the fused image with the height scale, to determine the actual height of the water level of the target scene in the fused image.

Corresponding to the above method for determining a position of a target, an example of the present disclosure further provides an apparatus for determining a position of a target. An apparatus for determining a position of a target provided by the example of the present disclosure is introduced.

As shown in FIG. 10, an apparatus for determining a position of a target includes:
an image acquisition module 1010, configured to acquire a real image of a target scene and a virtual image of the target scene;
an image fusion module 1020, configured to project the real image to the virtual image to generate a fused image;
a position determination module 1030, configured to determine a position of a preset target of the virtual image in the real image based on the fused image.

It can be seen that in the solution provided by the example of the present disclosure, since both the real image and the virtual image are images of the target scene, the preset target in the virtual image will have a corresponding position in the real image. When the position of the preset target in the real image is blocked by a person or an object appearing in a real scene, for example, when a manhole cover in the road of the target scene is covered with water due to waterlogging, the real image of the target scene in which the present target is covered, is projected to the virtual image of the target scene to obtain a fused image with one-to-one overlapping positions, and the corresponding position of the preset target in the virtual image is identified from the fused image, so that a manager can determine the position of the preset target in the current screen, thereby quickly and accurately locating the preset target, which can greatly improve target positioning efficiency.

As an example of the present disclosure, the above-mentioned image fusion module 1020 may include:
an image fusion unit, configured to project the real image to the virtual image with a first transparency to generate the fused image;
wherein the first transparency is greater than a second transparency of the virtual image.

As an example of the present disclosure, the above-mentioned position determination module 1030 may include:
a first position determination unit, configured to cover the fused image with the preset target to obtain the position of the preset target in the real image.

As an example of the present disclosure, the above-mentioned virtual image further includes a tag corresponding to the preset target, wherein the tag indicates a position of the preset target in the virtual image;
the above-mentioned position determination module 1030 may include:
a tag covering unit, configured to cover the fused image with the tag;
a second position determination unit, configured to determine the position of the preset target in the real image based on the tag.

As an example of the present disclosure, the above-mentioned position determination module 1030 may include:
a position identification unit, configured to identify the preset target in the fused image to obtain the position of the preset target located in the virtual image in the real image.

As an example of the present disclosure, the above-mentioned image acquisition module 1010 may include:
a first acquisition unit, configured to acquire a real image of a target scene and a panoramic image including the target scene; acquire a first PTZ value of a target dome camera that shoots the real image; determine a first projection coordinate in the panoramic image corresponding to the first PTZ value, based on the first PTZ value and the predetermined correspondence between PTZ values of the target dome camera and projection coordinates of the panoramic image; obtain the virtual image of the target scene from the panoramic image based on the first projection coordinate;
   or,
a second acquisition unit, configured to acquire a panoramic image including the target scene; change a display perspective of the panoramic image to the target scene in response to a user operation, and determine a second projection coordinate in the panoramic image after changing the perspective, based on the second projection coordinate and a predetermined correspondence between PTZ values of the target dome camera and projection coordinates of the panoramic image, determine a second PTZ value of the target dome camera corresponding to the second projection coordinate, and control the target dome camera to move according to the second PTZ value, and acquire a real image collected by the moved target dome camera.

As an example of the present disclosure, the above apparatus may further includes:
an operation receiving module, configured to receive an operation on a boundary identifier in the fused image;
wherein the operation indicates a target direction;
an identifier movement module, configured to control the boundary identifier to move along the target direction in response to the operation;
a screen size changing module, configured to reduce a screen size of one of the fused image and the virtual image and increase a screen size of the other one of the fused image and the virtual image along the target direction, in response to the movement of the boundary identifier along the target direction.

As an example of the present disclosure, the screen size of the virtual image is increased by increasing a transparency of the real image to 100%, and the screen size of the fused image is increased by reducing a transparency of the real image.

As an example of the present disclosure, the above-mentioned preset target may serve as a height scale based on a ground in the virtual image.

An example of the present disclosure further provides an electronic device, as shown in FIG. 11, which includes a processor 1101, a communication interface 1102, a memory 1103, and a communication bus 1104, wherein the processor 1101, the communication interface 1102, and the memory 1103 communicate with each other through the communication bus 1104,
the memory 1103, configured to store a computer program;
the processor 1101, configured to carry out the method for determining a position of a target described in any of the above examples when carrying out the program stored in the memory 1103.

It can be seen that in the solution provided by the examples of the present disclosure, since both the real image and the virtual image are images of the target scene, the preset target in the virtual image will have a corresponding position in the real image. When the position of the preset target in the real image is blocked by a person or an object appearing in a real scene, for example, when a manhole cover in the road of the target scene is covered with water due to waterlogging, the real image of the target scene in which the present target is covered, is projected to the virtual image of the target scene to obtain a fused image with one-to-one overlapping positions, and the corresponding position of the preset target in the virtual image is identified from the fused image, so that a manager can determine the position of the preset target in the current screen, thereby quickly and accurately locating the preset target, which can greatly improve target positioning efficiency.

The communication bus mentioned in the above-mentioned electronic device may be a Peripheral Component Interconnect (PCI) bus or an Extended Industry Standard Architecture (EISA) bus, etc. The communication bus can be divided into an address bus, a data bus, a control bus, and the like. For ease of presentation, only one thick line is used in the figure, but it does not mean that there is only one bus or one type of bus.

The communication interface is for communication between the above-mentioned electronic device and other devices.

The memory may include a Random Access Memory (RAM), and may also include a Non-Volatile Memory (NVM), such as at least one magnetic disk memory. Optionally, the memory may also be at least one storage device located away from the aforementioned processor.

The above-mentioned processor may be a general-purpose processor, including a Central Processing unit (CPU), a Network Processor (NP), etc.; it may also be a Digital Signal Processor (DSP), an Application Specific Integrated Circuit (ASIC), a Field-Programmable Gate Array (FPGA) or other programmable logic devices, discrete gate or transistor logic devices, discrete hardware components.

In yet another example provided by the present disclosure, a computer-readable storage medium is also provided, which stores computer program that, when executed by a processor, causes the processor to carry out steps of the method for determining a position of a target in any of the above-mentioned examples.

It can be seen that in the solution provided by the example of the present disclosure, since both the real image and the virtual image are images of the target scene, the preset target in the virtual image will have a corresponding position in the real image. When the position of the preset target in the real image is blocked by a person or an object appearing in a real scene, for example, when a manhole cover in the road of the target scene is covered with water due to waterlogging, the real image of the target scene in which the present target is covered, is projected to the virtual image of the target scene to obtain a fused image with one-to-one overlapping positions, and the corresponding position of the preset target in the virtual image is identified from the fused image, so that a manager can determine the position of the preset target in the current screen, thereby quickly and accurately locating the preset target, which can greatly improve target positioning efficiency.

In yet another example provided by the present disclosure, a computer program product including instructions is also provided, which, when running on a computer, causes the computer to carry out steps of the method for determining a position of a target in any of the above-mentioned examples.

It can be seen that in the solution provided by the example of the present disclosure, since both the real image and the virtual image are images of the target scene, the preset target in the virtual image will have a corresponding position in the real image. When the position of the preset target in the real image is blocked by a person or an object appearing in a real scene, for example, when a manhole cover in the road of the target scene is covered with water due to waterlogging, the real image of the target scene in which the present target is covered, is projected to the virtual image of the target scene to obtain a fused image with one-to-one overlapping positions, and the corresponding position of the preset target in the virtual image is identified from the fused image, so that a manager can determine the position of the preset target in the current screen, thereby quickly and accurately locating the preset target, which can greatly improve target positioning efficiency.

In the above examples, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the examples of the present disclosure are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes one or more available media integrations. The usable media may be magnetic media (such as a floppy disk, a hard disk, a magnetic tape), optical media (such as DVD), or semiconductor media (such as Solid State Disk (SSD)) and the like.

It should be noted that, relational terms such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or apparatus. Without further limitation, elements defined by the phrase "comprising one..." do not preclude the presence of additional identical elements in a process, method, article or device that includes the mentioned elements.

The various examples in this specification are described in a related manner. Each example focuses on the differences from other examples, and the same and similar parts between the various examples can be referred to each other. Especially, for the example of the apparatus, the electronic device, the computer-readable storage medium, and the computer program product, the description is relatively simple because it is basically similar to the example of the method, and the relevant points can be referred to the partial description of the example of the method.

The above descriptions are only preferred examples of the present disclosure, and are not intended to limit the present disclosure. Any modifications, equivalent replacements, improvements and the like made within the spirit and principles of the present disclosure shall be included within the scope of protection of the present disclosure.

## Claims

1. A method for determining a position of a target, comprising:
acquiring a real image of a target scene and a virtual image of the target scene;
projecting the real image to the virtual image to generate a fused image;
determining a position of a preset target located in the virtual image in the real image based on the fused image.

2. The method according to claim 1, wherein projecting the real image to the virtual image to generate the fused image comprises:
projecting the real image to the virtual image with a first transparency to generate the fused image; wherein the first transparency is greater than a second transparency of the virtual image.

3. The method according to claim 1 or 2, wherein determining the position of the preset target located in the virtual image in the real image based on the fused image comprises:
covering the fused image with the preset target to obtain the position of the preset target in the real image.

4. The method according to claim 1 or 2, wherein the virtual image further comprises a tag corresponding to the preset target, wherein the tag indicates a position of the preset target in the virtual image;
determining the position of the preset target located in the virtual image in the real image based on the fused image comprises:
covering the fused image with the tag;
determining the position of the preset target in the real image based on the tag.

5. The method according to claim 2, wherein determining the position of the preset target located in the virtual image in the real image based on the fused image comprises:
identifying the preset target in the fused image to obtain the position of the preset target located in the virtual image in the real image.

6. The method according to claim 1, further comprising:
receiving an operation on a boundary identifier in the fused image, wherein the operation indicates a target direction;
in response to the operation, controlling the boundary identifier to move along the target direction;
in response to the movement of the boundary identifier along the target direction, reducing a screen size of one of the fused image and the virtual image and increasing a screen size of the other one of the fused image and the virtual image along the target direction.

7. The method according to claim 6, wherein,
the screen size of the virtual image is increased by increasing a transparency of the real image to 100%, and the screen size of the fused image is increased by reducing a transparency of the real image.

8. The method according to claim 1, wherein the preset target serves as a height scale based on a ground in the virtual image.

9. An apparatus for determining a position of a target, comprising:
an image acquisition module, configured to acquire a real image of a target scene and a virtual image of the target scene;
an image fusion module, configured to project the real image to the virtual image to generate a fused image;
a position determination module, configured to determine a position of a preset target located in the virtual image in the real image based on the fused image.

10. The apparatus according to claim 9, wherein the image fusion module comprises:
an image fusion unit, configured to project the real image to the virtual image with a first transparency to generate the fused image; wherein the first transparency is greater than a second transparency of the virtual image.

11. The apparatus according to claim 8 or 9, wherein the position determination module comprises:
a first position determination unit, configured to cover the fused image with the preset target to obtain the position of the preset target in the real image.

12. The apparatus according to claim 8 or 9, wherein the virtual image further comprises a tag corresponding to the preset target, wherein the tag indicates a position of the preset target in the virtual image;
the position determination module comprises:
a tag covering unit, configured to cover the fused image with the tag;
a second position determination unit, configured to determine the position of the preset target in the real image based on the tag.

13. The apparatus according to claim 10, wherein the position determination module comprises:
a position identification unit, configured to identify the preset target in the fused image to obtain the position of the preset target located in the virtual image in the real image.

14. The apparatus according to claim 9, wherein the apparatus further comprises:
an operation receiving module, configured to receive an operation on a boundary identifier in the fused image, wherein the operation indicates a target direction;
an identifier movement module, configured to control the boundary identifier to move along the target direction in response to the operation;
a screen size changing module, configured to reduce a screen size of one of the fused image and the virtual image and increase a screen size of the other one of the fused image and the virtual image along the target direction, in response to the movement of the boundary identifier along the target direction.

15. The apparatus according to claim 14, wherein the screen size of the virtual image is increased by increasing a transparency of the real image to 100%, and the screen size of the fused image is increased by reducing a transparency of the real image.

16. The apparatus according to claim 9, wherein the preset target serves as a height scale based on a ground in the virtual image.

17. An electronic device, comprising a processor, a communication interface, a memory and a communication bus, wherein the processor, the communication interface and the memory communicate with each other through the communication bus;
the memory, configured to store a computer program;
the processor, configured to carry out the method in any one of claims 1 to 8 when carrying out the program stored in the memory.

18. A computer-readable storage medium, having stored therein a computer program that, when executed by a processor, causes the processor to carry out the method according to any one of claims 1 to 8.

19. A computer program product including instructions, which, when running on a computer, causes the computer to carry out the method according to any one of claims 1 to 8.
